# EUROPÄISCHE PATENTSCHRIFT

(11) **EP 1 231 691 B1**
(45) Veröffentlichungstag und Bekanntmachung des Hinweises auf die Patenterteilung: **23.03.2011**
(21) Anmeldenummer: 02002416.2
(22) Anmeldetag: 01.02.2002
(51) Int. Cl.: H02B 11/133

(54) **Auslösevorrichtung für einen ausfahrbaren Leistungsschalter**
Switch operating device for drawout circuit breaker
Commande d'interrupteur pour disjoncteur extractible

(30) Priorität: 02.02.2001 DE 10104647
(43) Veröffentlichungstag der Anmeldung: 14.08.2002
(73) Patentinhaber: Eaton Industries GmbH, 53115 Bonn (DE)
(72) Erfinder: Kutsche, Wolfgang, 53919 Weilerwist (DE); Gast, Andreas, 50321 Brühl (DE)

(56) Entgegenhaltungen:
- EP-A- 0 045 545
- FR-A- 2 581 805

## Beschreibung

Die Erfindung betrifft eine Auslösevorrichtung für einen Leistungsschalter in Verbindung mit einer Ausfahreinrichtung nach dem Oberbegriff von Anspruch1.

Aus der Druckschrift US-PS 2 777 024 ist eine Ausfahreinrichtung bekannt, in der ein auf einem Schlitten befestigter Leistungsschalter über Rollen auf in den Seitenwänden der Ausfahreinrichtung befestigten Schienen von einer Eingefahren-Stellung in eine Test-Stellung, von dieser in eine Ausgefahren-Stellung und umgekehrt verfahren werden kann. Rückseitige Steckkontakte des Leistungsschalters für den Hauptstrom sind in der Eingefahren-Stellung mit feststehenden Gegenkontakten verbunden, in der Test- und der Ausgefahren-Stellung dagegen von diesen getrennt. In der Eingefahren- und der Test-Stellung sind rückseitige Hilfskontakte für Steuer- und Informationssignale miteinander verbunden und in der Ausgefahren-Stellung getrennt. Zum Verfahren ist die Ausfahreinrichtung mit einem Spindelgetriebe ausgestattet, das einerseits von einer von vorn durch eine Kurbelöffnung einsteckbaren Steckkurbel als Antriebswerkzeug antreibbar und anderseits mit seitlichen Antriebshebeln verbunden ist, die ihrerseits mit dem Schlitten in Wirkverbindung stehen. Beim Verfahren des Schlittens wird eine mit einer der Schienen über eine Parallelführung gekoppelte und von außen betätigbare seitliche Verriegelungsplatte in einer zu den Seitenwänden parallelen Ebene verschoben. Ein am Schlitten angelenkter Auslösehebel wird bei Verschiebung der Verriegelungsplatte beaufschlagt, wenn sich der Schlitten außerhalb der Eingefahren- oder außerhalb der Ausgefahren-Stellung befindet. Bei eingeschaltetem Leistungsschalter beaufschlagt die von der Verriegelungsplatte bewirkte Schwenkbewegung des Auslösehebels eine mit diesem über ein Federmittel verbundene Auslösewelle des Leistungsschalters, wodurch der Betätigungsmechanismus des Leistungsschalters entklinkt wird, was zum Öffnen der Hauptkontakte führt. Durch die aus Verriegelungsplatte, Auslösehebel und Auslösewelle bestehende Auslösevorrichtung wird verhindert, dass die Hauptkontakte des Leistungsschalters zwischen Eingefahren- und Ausgefahren-Stellung geschlossen sind oder geschlossen werden können. Der Nachteil dieser Auslösevorrichtung besteht darin, dass sie mit einer manuellen Betätigung der Verriegelungsplatte verbunden ist, kein Schließen der Hauptkontakte in der Test-Stellung erlaubt und keine sichere Gewähr darüber gibt, dass bei geschlossenen Hauptkontakten zu Anfang der Ausfahrbewegung zwischen den Steckkontakten und den Gegenkontakten für den Hauptstrom kein Lichtbogen auftritt.

In DE 43 15 490 A1 ist eine stellungsbezogene Auslösevorrichtung für einen in einen Einschubträger einschiebbaren Leistungsschalter beschrieben. Im festen Anlagenteil und am Leistungsschalter sind Anschlussfahnen vorgesehen. Der Leistungsschalter wird in eine feste Stellung eingeschoben. Zur elektrisch leitenden Verbindung der festen mit den am Leistungsschalter angeordneten Anschlussfahnen sind Kontaktbrücken vorgesehen, die in einem Kontaktrahmen angeordnet sind, der über einen fest im Einschubträger unterhalb des Leistungsschalters angeordneten Spindelantrieb in die Eingefahren-, die Test- und Ausgefahren-Stellung verfahrbar ist. Ein längliches Auslöseglied ist an seinem einen Ende durch den Spindelantrieb parallel zum Kontaktrahmen formschlüssig antreibbar. Das andere, freie Ende ist senkrecht zur Längsrichtung des Auslösegliedes nachgiebig ausgebildet, an einer festen Traverse im festen Anlagenteil zwangsgeführt angelenkt und weist eine Auslösekurve auf, durch die ein an dem Leistungsschalter angeordneter Auslösestift steuerbar ist. Dadurch wird der Leistungsschalter beim Einschieben automatisch abgeschaltet und kann zwischen der Eingefahren- und der Test-Stellung des Kontaktrahmens nicht eingeschaltet werden. In der Eingefahren-, der Test- und der Ausgefahren-Stellung des Kontaktrahmens kann der Leistungsschalter geschaltet werden. Diese Lösung ist nicht auf die sogenannte Ausfahrtechnik übertragbar und bietet auch keine sichere Gewähr, dass bei geschlossenen Hauptkontakten zu Beginn des Verfahrens des Kontaktrahmens aus der Eingefahren-Stellung kein Lichtbogen auftritt.

Der Erfindung liegt daher die Aufgabe zugrunde, die Sicherheit bei ausfahrbaren Leistungsschaltern zu erhöhen.

Ausgehend von einer Auslösevorrichtung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Die ersten und die zweiten Auslösemittel sind über einen im Schlitten gelagerten Koppelschieber wirkverbunden. Die zweiten Auslösemittel setzen sich aus einer Auslösekurve und einem Auslöseschieber zusammen, die in unterschiedlichen Verfahrstellungen von dem Koppelschieber unter Beaufschlagung des Federmittels abgetastet werden. Die Auslösekurve wird abgefragt, wenn sich der mit einem Schlitten verfahrbare Leistungsschalter zwischen der Eingefahren-Stellung und der Test-Stellung befindet. In diesem Bereich wird sichergestellt, dass durch die bewirkte Verlagerung der ersten Auslösemittel der Betätigungsmechanismus des Leistungsschalters entklinkt wird, wodurch verhindert wird, dass die Hauptkontakte des Leistungsschalters geschlossen werden oder bleiben. In der Test-Stellung und zwischen dieser und der Ausgefahren-Stellung können dagegen die Hauptkontakte geschlossen werden oder bleiben. In der Eingefahren-Stellung fragt der Koppelschieber den Zustand des Auslöseschiebers ab. Beim Ansetzen des Antriebswerkzeuges wird der Auslöseschieber derart verlagert, dass er den Koppelschieber entgegen dem Federmittel beaufschlagt und diese Bewegung an die ersten Auslösemittel weitergibt, was zu einem Entklinken des Betätigungsmechanismus führt. Geschlossene Hauptkontakte werden also durch das Ansetzen des Antriebswerkzeuges noch vor dem Verfahren des Leistungsschalters aus der Eingefahren-Stellung geöffnet, sodass eine Lichtbogenbildung an den rückseitigen Steckkontakten bei Trennung von den feststehenden Gegenkontakten ausgeschlossen ist. Im normalen Betrieb, d.h. in der Eingefahren-Stellung und ohne angesetztes Antriebswerkzeug kann der Auslöseschieber den Koppelschieber nicht beaufschlagen, weshalb hier die Hauptkontakte geschlossen werden können. Die vorstehend beschriebenen Sicherheitsfunktionen werden mit wenigen und einfachen Mitteln bewirkt.

Eine platzsparende Ausgestaltung des Auslöseschiebers besteht in der Verwendung einer Steckkurbel als Antriebswerkzeug und einer schwenkbaren Lagerung des Auslöseschiebers mit Schwenkachse parallel zur Einführrichtung der Steckkurbel. Durch Anschrägen des durch die Steckkurbel beaufschlagbaren Teils des Auslöseschiebers wird eine günstige Kraftübertragung von der Steckkurbel auf den Auslöseschieber bewirkt.

Eine vorteilhafte Weiterbildung der Erfindung besteht darin, dass die Auslösekurve senkrecht nach innen von der zugehörigen Seitenwand der Ausfahreinrichtung weist und der Koppelschieber in gleicher Richtung verschieblich ist.

Es ist zweckmäßig, die ersten Auslösemittel als längsverschieblichen Stößel und als ein diesen in Richtung Koppelschieber beaufschlagendes Federmittel auszubilden, wobei insbesondere der Auslösestößel rückseitig aus dem Leistungsschalter ragt. Hierbei führt eine auslöserseitige Abschrägung des Koppelschiebers zu einer guten Bewegungsübertragung von diesem zum Auslösestößel. Diesem Zweck dient weiterhin die Anordnung eines Zwischenelementes mit runder Oberfläche zwischen Koppelschieber und Auslösestößel, beispielsweise eine Kugel oder eine Walze.

Eine alternative zweckmäßige Weiterbildung des ersten Auslösemittels besteht in der Verwendung eines federbeaufschlagten Auslösehebels.

Die Auslösekurve kann feststehend angeordnet oder einteilig mit dem Auslöseschieber verbunden sein.

Eine Weiterbildung der Erfindung besteht darin, durch eine weitere Auslösekurve das Schließen oder Geschlossenhalten der Hauptkontakte auch zwischen der Test- und der Ausgefahren-Stellung zu verhindern, um diesbezüglichen Sicherheitsanforderungen zu genügen.

Weitere Einzelheiten und Vorteile der Erfindung ergeben sich aus dem folgenden, anhand von Figuren erläuterten Ausführungsbeispiel. Es zeigen
- Figur 1:: eine Ausfahreinrichtung mit Leistungsschalter;
- Figur 2:: eine erfindungsgemäße Auslösevorrichtung in Verbindung mit der Ausfahreinrichtung nach Fig. 1;
- Figur 3:: die Auslösevorrichtung nach Fig. 2 im Detail;
- Figur 4:: die Auslösevorrichtung in Ausgefahren-Stellung des Leistungsschalters;
- Figur 5:: die Auslösevorrichtung zwischen Ausgefahren- und Test-Stellung des Leistungsschalters;
- Figur 6:: die Auslösevorrichtung in Test-Stellung des Leistungsschalters;
- Figur 7:: die Auslösevorrichtung zwischen Test- und Eingefahren-Stellung des Leistungsschalters;
- Figur 8:: die Auslösevorrichtung in Eingefahren-Stellung des Leistungsschalters bei vollständig eingeführtem Antriebswerkzeug;
- Figur 9:: die Auslösevorrichtung in Eingefahren-Stellung des Leistungsschalters bei gezogenem Antriebswerkzeug.

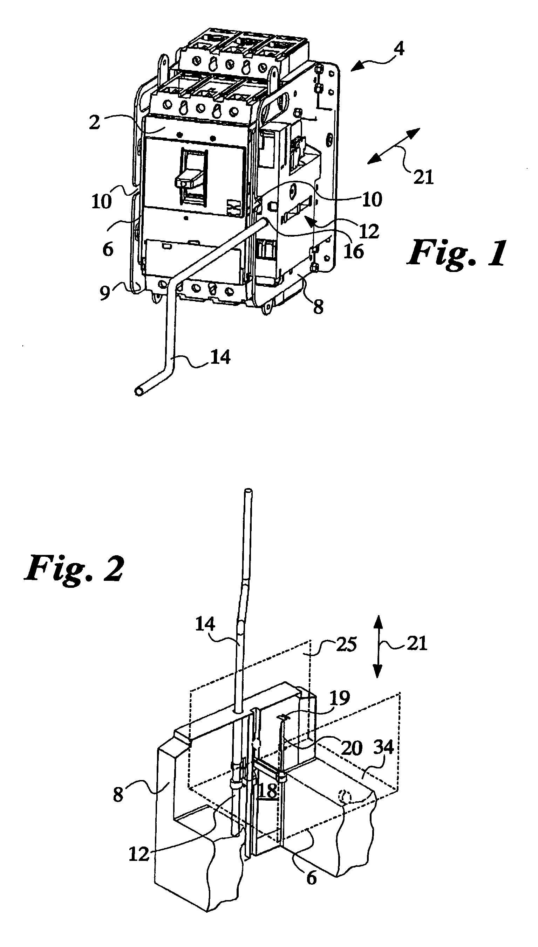

In Fig. 1 ist ein Leistungsschalter 2 in Verbindung mit einer Ausfahreinrichtung 4 gezeigt. In der Ausfahreinrichtung 4 ist der Leistungsschalter 2 auf einem U-förmigen Schlitten 6 befestigt. Mit dem Schlitten 6 kann der Leistungsschalter 2 auf in den Seitenwänden 8 und 9 der Ausfahreinrichtung 4 ausgebildeten Schienen 10 von einer Eingefahren-Stellung in eine Test-Stellung, von dieser in eine Ausgefahren-Stellung und umgekehrt verfahren werden. In den Figuren nicht sichtbare rückseitige Steckkontakte des Leistungsschalters 4 für den Hauptstrom sind in der Eingefahren-Stellung mit feststehenden Gegenkontakten verbunden, in der Test- und der Ausgefahren-Stellung dagegen von diesen getrennt. Dazu ist in der rechts abgebildeten Seitenwand 8 ein Spindelantrieb 12 vorgesehen. Der Spindelantrieb 12 wird mittels eines als Steckkurbel 14 ausgebildeten Antriebswerkzeuges betrieben, das dazu in eine frontseitige Öffnung 16 einzuführen ist. Der Spindelantrieb 12 steht über an sich bekannte seitliche Antriebsmittel mit dem Schlitten 16 in Wirkverbindung.

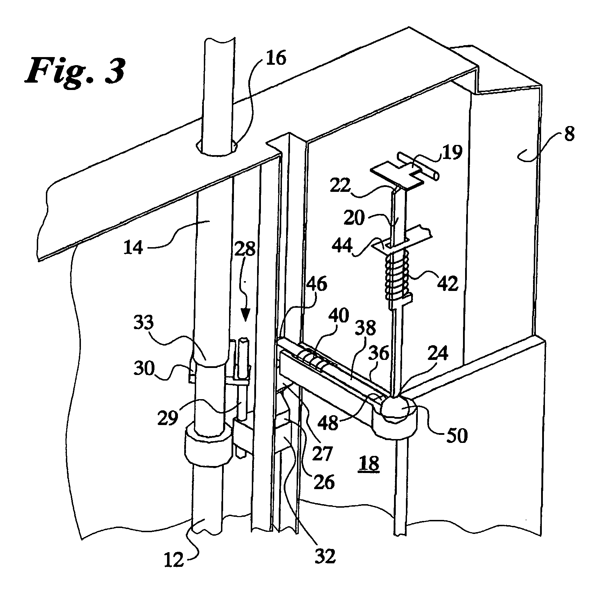

In Fig. 2 und Fig. 3 ist die erfindungsgemäße Auslösevorrichtung 18 in Verbindung mit der Ausfahreinrichtung 4 abgebildet, wobei für die zur Darstellung der Auslösevorrichtung 18 unwesentlichen Elemente der Ausfahreinrichtung 4 und des Leistungsschalters 2 fortgelassen worden sind. In dem Leistungsschalter ist ein erstes Auslösemittel in Gestalt eines Auslösestößels 20 vorgesehen, der in bekannter Weise über ein inneres Stößelende 22 mit einem Verklinkungselement 19 aus dem Verklinkungssystem des Betätigungsmechanismus (Schaltschlosses) des Leistungsschalters zusammenwirkt. Der längsverschieblich in Verfahrrichtung 21 des Schlittens 6 gelagerte Auslösestößel 20 ragt mit einem äußeren Stößelende 24 rückseitig aus dem Leistungsschalter. Gegenüber dem Seitenschenkel 25 des in Fig. 2 mit unterbrochenen Linien angedeuteten Schlittens 6 sind in der Seitenwand 8 der Ausfahreinrichtung 4 zweite Auslösemittel vorgesehen. Diese bestehen aus einer in der Seitenwand 8 feststehend angeordneten Auslösekurve 26 und einem Auslöseschieber 28. Der zweiarmige Auslöseschieber 28 ist in der Seitenwand 8 senkrecht zur Einführrichtung der Steckkurbel 14 schwenkbar gelagert, das heißt, seine Schwenkachse 29 verläuft parallel zur Einführrichtung. Der erste Hebelarm 30 des Auslöseschiebers 28 ist durch das Kurbelende 33 der Steckkurbel 14 beaufschlagbar, sodass der Auslöseschieber 28 beim Einführen der Steckkurbel 14 im Uhrzeigersinn in die gezeigte Stellung verschwenkt wird. Der zweite Hebelarm 32 des Auslöseschiebers 28 ist in Richtung Eingefahren-Stellung unmittelbar hinter der Auslösekurve 26 angeordnet. Der erste Hebelarm 30 ist zur Seite der Steckkurbel 14 hin mit einer Schräge ausgeführt. Die zweiten Auslösemittel umfassen in der gezeigten Ausführungsform noch eine weitere Auslösekurve 27, die in der Seitenwand 8 in Richtung Ausgefahren-Stellung feststehend angeordnet ist.

Am rückseitigen Mittelschenkel 34 des Schlittens 6 ist in einer Längsführung 36 ein Koppelschieber 38 zwischen dem äußeren Stößelende 24 des Auslösestößels 20 einerseits und den zweiten Auslösemitteln 26 bis 28 anderseits gelagert. Der Koppelschieber 38 wird durch ein erstes Federmittel 40 in Gestalt einer Schraubenfeder in Richtung zu den zweiten Auslösemitteln 26 bis 28 beaufschlagt. In entsprechender Weise wird der Auslösestößel 20 durch ein zweites Federmittel 42 in Gestalt einer sich gegen ein inneres Gehäuseelement 44 des Leistungsschalters abstützenden Schraubenfeder zum Koppelschieber 38 hin beaufschlagt. Der Koppelschieber 38 ist entlang seiner Längsachse senkrecht zur den Seitenwänden 8, 9 und senkrecht zur Verfahrrichtung 21 des Schlittens 6 verschieblich gelagert. Das zu den zweiten Auslösemitteln 26 bis 28 weisende erste Schieberende 46 ist abgerundet, wogegen das zum Auslösestößel 20 weisende zweite Schieberende 48 mit einer Schräge versehen ist. Zwischen dem zweiten Schieberende 48 des Koppelschiebers 38 und dem äußeren Ende 24 des Auslösestößels 20 ist ein kugelförmiges Zwischenelement 50 in dem Schlitten 6 gelagert. Die beschriebene Ausbildung der Schieberenden 46 und 48 und das Zwischenelement 50 gewährleisten eine reibungsarme Bewegungsübertragung zwischen den zweiten Auslösemitteln 26 bis 28 und dem Koppelschieber 38 einerseits sowie zwischen dem Auslösestößel 20 und dem Koppelschieber 38 anderseits.

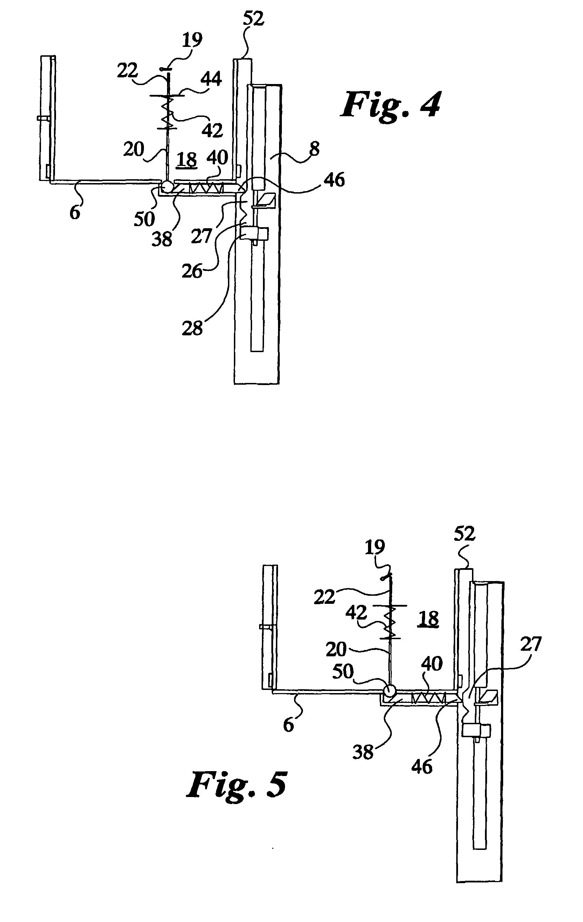

Die Funktion der Auslösevorrichtung 18 wird nachstehend anhand von Fig. 4 bis Fig. 9 beschrieben.

In Fig. 4 befindet sich der Schlitten 6 mit dem darauf montierten Leistungsschalter in der Ausgefahren-Stellung. Das erste Schieberende 46 ist außerhalb des Einwirkungsbereiches der zweiten Auslösemittel 26 bis 28. Dadurch befindet sich der Koppelschieber 38 unter der Einwirkung des ersten Federmittels 40 in seiner zur rechten Seitenwand 8 weisenden Ruhestellung. Damit besteht auch kein Hindernis für das Zwischenelement 50 und den Auslösestößel 20, unter der Einwirkung des zweiten Federmittels 42 ihre von der Frontseite 52 abgewandte Ruhestellung (in Fig. 4 nach unten) einzunehmen, wodurch sich das innere Stößelende 22 außerhalb des Eingriffsbereichs zum Verklinkungselement 19 des Leistungsschalters befindet. Der Leistungsschalter kann demnach in der Ausgefahren-Stellung eingeschaltet werden bzw. bleiben.

In Fig. 5 befindet sich der Schlitten 6 in einer Position zwischen der Ausgefahren-Stellung und der Test-Stellung. Das erste Schieberende 46 ist in den Einflussbereich der nach innen vorstehenden weiteren Auslösekurve 27 gelangt.

Dadurch sind der Koppelschieber 38 entgegen der Wirkung des ersten Federmittels 40nach links und in der Folge das Zwischenelement 50 und der Auslösestößel 20 entgegen der Wirkung des zweiten Federmittels 42 zur Frontseite 52 hin (in Fig. 5 nach oben) verschoben worden. Durch diese Position des Auslösestößels 20 hat das innere Stößelende 22 entklinkend über das Verklinkungselement 19 in das Verklinkungssystem eingegriffen, wodurch der Betätigungsmechanismus des Leistungsschalters ausgelöst worden ist bzw. ausgelöst bleibt, sodass der Leistungsschalter ausgeschaltet worden ist bzw. nicht eingeschaltet werden kann.

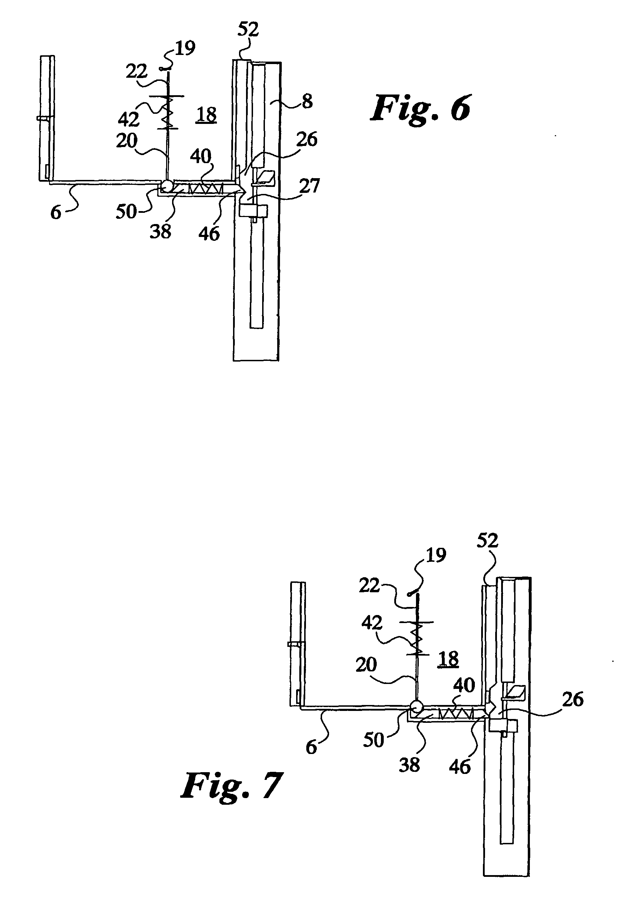

In Fig. 6 befindet sich der Schlitten 6 in der Test-Stellung. Das erste Schieberende 46 ragt in einen außerhalb der Einflussbereiche der beiden Auslösekurven 26 und 27 befindlichen Zwischenbereich. Dadurch ist der Koppelschieber 38 unter der Einwirkung des ersten Federmittels 40 in seiner zur rechten Seitenwand 8 weisenden Ruhestellung. Somit besteht auch kein Hindernis für das Zwischenelement 50 und den Auslösestößel 20, unter der Einwirkung des zweiten Federmittels 42 ihre von der Frontseite 52 abgewandte Ruhestellung (in Fig. 6 nach unten) einzunehmen, wodurch sich das innere Stößelende 22 außerhalb des Eingriffsbereichs zum Verklinkungselement 19 des Leistungsschalters befindet. Der Leistungsschalter kann demnach in der Test-Stellung eingeschaltet werden bzw. bleiben.

In Fig. 7 befindet sich der Schlitten 6 in einer Position zwischen der Test-Stellung und der Eingefahren-Stellung. Das erste Schieberende 46 ist in den Einflussbereich der nach innen vorstehenden Auslösekurve 26 gelangt. Dadurch sind der Koppelschieber 38 entgegen der Wirkung des ersten Federmittels 40nach links und in der Folge das Zwischenelement 50 und der Auslösestößel 20 entgegen der Wirkung des zweiten Federmittels 42 zur Frontseite 52 hin (in Fig. 7 nach oben) verschoben worden. Durch diese Position des Auslösestößels 20 hat das innere Stößelende 22 entklinkend das Verklinkungselement 19 beaufschlagt, wodurch der Betätigungsmechanismus des Leistungsschalters ausgelöst worden ist bzw. ausgelöst bleibt, sodass der Leistungsschalter ausgeschaltet worden ist bzw. nicht eingeschaltet werden kann.

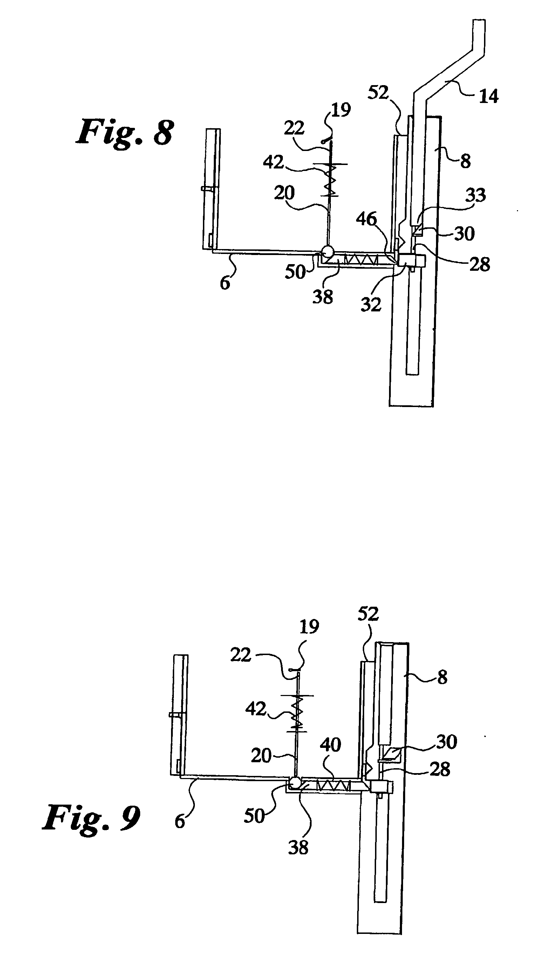

In Fig. 8 befindet sich der Schlitten 6 in der Eingefahren-Stellung, wobei die Steckkurbel 14 in die rechte Seitenwand 8 eingeführt ist. Das Kurbelende 33 hat den ersten Hebelarm 30 des Auslöseschiebers 28 in der Weise beaufschlagt, dass dieser mit seinem zweiten Hebelarm 32 einwärts geschwenkt worden ist. Der zweite Hebelarm 32 hält über das erste Schieberende 46 den Koppelschieber 38 entgegen der Wirkung des ersten Federmittels 40in der von der rechten Seitenwand 8 abweisenden Position und in der Folge das Zwischenelement 50 und der Auslösestößel 20 entgegen der Wirkung des zweiten Federmittels 42 in der zur Frontseite 52 gerichteten Position (in Fig. 8 nach oben). Durch diese Position des Auslösestößels 20 hat das innere Stößelende 22 entklinkend das Verklinkungselement 19 beaufschlagt, wodurch der Betätigungsmechanismus des Leistungsschalters ausgelöst worden ist bzw. ausgelöst bleibt, sodass der Leistungsschalter in der Eingefahrenstellung infolge der eingeführten Steckkurbel 14 ausgeschaltet worden ist bzw. nicht eingeschaltet werden kann.

In Fig. 9 befindet sich der Schlitten 6 ebenfalls in der Eingefahren-Stellung, die Steckkurbel ist jedoch gezogen. Durch die damit verbundene Freigabe des Auslöseschiebers 28 ist der Koppelschieber 38 unter der Wirkung des ersten Federmittels 40 in seine zur rechten Seitenwand 8 weisende Ruhestellung gelangt. Daraufhin befinden sich das Zwischenelement 50 und der Auslösestößel 20 unter der Einwirkung des zweiten Federmittels 42 in ihrer von der Frontseite 52 abgewandte Ruhestellung (in Fig. 9 nach unten), wodurch sich das innere Stößelende 22 außerhalb des Eingriffsbereichs zum Verklinkungselement 19 des Leistungsschalters befindet. Der Leistungsschalter kann demnach in der Eingefahren-Stellung bei gezogener Steckkurbel eingeschaltet werden bzw. bleibt eingeschaltet.

Die vorliegende Erfindung ist nicht auf die vorstehend beschriebenen Ausführungsformen beschränkt, sondern umfasst auch alle im Sinne der Erfindung gleichwirkenden Ausführungsformen. So lässt sich die Erfindung beispielsweise dahingehend ausgestalten, dass statt eines kugelförmigen ein walzenförmiges Zwischenelement verwendet wird oder dass vereinfachend das Zwischenelement entfällt. Wenn die Sicherheitsanforderungen es erlauben, ist die weitere Auslösekurve nicht erforderlich. Das Antriebswerkzeug kann beispielsweise auch als Steckschlüssel oder als Schraubendreher ausgebildet sein.

### Bezugszeichenliste:

- 2: Leistungsschalter
- 4: Ausfahreinrichtung
- 6: Schlitten
- 8; 9: Seitenwand
- 10: Schienen
- 12: Spindelantrieb
- 14: Antriebswerkzeug
- 16: Öffnung
- 18: Auslösevorrichtung
- 19: Verklinkungselement
- 20: Auslösestößel
- 21: Verfahrrichtung
- 22; 24: Stößelende
- 25: Seitenschenkel
- 26; 27: Auslösekurve
- 28: Auslöseschieber
- 29: Schwenkachse
- 30; 32: Hebelarm
- 33: Kurbelende
- 34: Mittelschenkel
- 38: Koppelschieber
- 40; 42: Federmittel
- 44: Gehäuseelement
- 46; 48: Schieberende
- 50: Zwischenelement
- 52: Frontseite

## Patentansprüche

1. Auslösevorrichtung für einen Leistungsschalter in Verbindung mit einer Ausfahreinrichtung (4), in welcher der auf einem Schlitten (6) befestigte Leistungsschalter (2) auf in den Seitenwänden (8; 9) der Ausfahreinrichtung (4) angeordneten Schienen (10) von einer Eingefahren-Stellung in eine Test-Stellung, von dieser in eine Ausgefahren-Stellung und umgekehrt verfahren werden kann, wobei rückseitige Steckkontakte des Leistungsschalters (2) für den Hauptstrom in der Eingefahren-Stellung mit feststehenden Gegenkontakten verbunden, in der Test- und der Ausgefahren-Stellung dagegen von diesen getrennt sind, wozu ein Antrieb, insbesondere Spindelantrieb (12), einerseits von einem anzusetzenden Antriebswerkzeug (14) antreibbar und anderseits über seitliche Antriebsmittel mit dem Schlitten (6) in Wirkverbindung steht, enthaltend
- mit dem Leistungsschalter (2) verbundene und auf dessen Betätigungsmechanismus entklinkend wirkende erste Auslösemittel (20, 42) und
- mit der Ausfahreinrichtung (4) verbundene zweite Auslösemittel (26, 28),
**dadurch gekennzeichnet,**
- **dass** die ersten Auslösemittel (20, 42) endseitig aus dem Leistungsschalter (2) reichen,
- **dass** die zweiten Auslösemittel (26, 28) bestehen aus
- einer in der Ausfahreinrichtung (4) angeordneten Auslösekurve (26) und
- einem in der Ausfahreinrichtung (4) gelagerten Auslöseschieber (28), der in Richtung Eingefahren-Stellung unmittelbar hinter der Auslösekurve (26) angeordnet und durch das Antriebswerkzeug(14) beaufschlagbar ist,
- **dass** ein im Schlitten (6) lagernder Koppelschieber (38) zwischen den ersten Auslösemitteln (20, 42) und den zweiten Auslösemitteln (26, 28) angeordnet ist,
- **dass** mindestens eines von den ersten Auslösemitteln (20, 42) und dem Koppelschieber (38) Federmittel (40 bzw. 42) enthalten, die den Koppelschieber (38) in Richtung zu den zweiten Auslösemitteln (26, 28) beaufschlagen, und
- **dass** der Koppelschieber (38) in der Eingefahren-Stellung mit dem Auslöseschieber (28) und zwischen der Eingefahren-Stellung und der Test-Stellung mit der Auslösekurve (26) gekoppelt ist.

2. Auslösevorrichtung nach vorstehendem Anspruch, **dadurch gekennzeichnet, dass** das Antriebswerkzeug (14) eine Steckkurbel ist und der Auslöseschieber (28) in einer der Seitenwände (8) der Ausfahreinrichtung (4) um eine Achse parallel zur Einführrichtung der Steckkurbel (14) schwenkbar gelagert ist.

3. Auslösevorrichtung nach vorstehendem Anspruch, **dadurch gekennzeichnet, dass** der Auslöseschieber (28) zur Seite der Steckkurbel (14) angeschrägt ist.

4. Auslösevorrichtung nach einem der vorstehenden Ansprüche, **dadurch gekennzeichnet, dass** der Koppelschieber (38) senkrecht zur benachbarten Seitenwand (8) der Ausfahreinrichtung (4) und senkrecht zur Verfahrrichtung (21) verschieblich ist und die Auslösekurve (26) zum Koppelschieber (38) weist.

5. Auslösevorrichtung nach einem der vorstehenden Ansprüche, **dadurch gekennzeichnet, dass** die ersten Auslösemittel (20, 42) aus einem Auslösestößel (20), der zwischen Koppelschieber (38) und einem Verklinkungselement (19) des Betätigungsmechanismus des Leistungsschalters (2) in Verfahrrichtung (21) des Schlittens (6) längsverschieblich angeordnet ist, und einem weiteren Federmittel (42), das den Auslösestößel (20) in Richtung Koppelschieber (38) beaufschlagt, gebildet werden.

6. Auslösevorrichtung nach vorstehendem Anspruch, **dadurch gekennzeichnet, dass** der Auslösestößel (20) mit einem Ende rückseitig aus dem Leistungsschalter (2) reicht.

7. Auslösevorrichtung nach Anspruch5 oder 6, **dadurch gekennzeichnet, dass** der Koppelschieber (38) zur Seite des Auslösestößels (20) angeschrägt ist.

8. Auslösevorrichtung nach vorstehendem Anspruch, **dadurch gekennzeichnet, dass** im Schlitten (6) zwischen Auslösestößel (20) und Koppelschieber (38) ein Zwischenelement (50) mit zumindest bereichsweise abgerundeter Oberfläche gelagert ist.

9. Auslösevorrichtung nach Anspruch 8, **dadurch gekennzeichnet, dass** das Zwischenelement (50) mit einer kugelförmigen Oberfläche ausgestattet ist.

10. Auslösevorrichtung nach Anspruch 8, **dadurch gekennzeichnet, dass** das Zwischenelement (50) mit einer zylinderförmigen Mantelfläche ausgestattet ist.

11. Auslösevorrichtung nach einem der Ansprüche 1 bis 4, **dadurch gekennzeichnet, dass** die ersten Auslösemittel einen Auslösehebel enthalten, der zwischen Koppelschieber (38) und einem Verklinkungselement (19) des Betätigungsmechanismus des Leistungsschalters (2) schwenkbar angeordnet in Richtung Koppelschieber (38) federbeaufschlagt ist.

12. Auslösevorrichtung nach einem der vorstehenden Ansprüche, **dadurch gekennzeichnet, dass** die Auslösekurve (26) feststehend angeordnet ist.

13. Auslösevorrichtung nach einem der Ansprüche 1 bis 11, **dadurch gekennzeichnet, dass** die Auslösekurve mit dem Auslöseschieber einteilig verbunden ist.

14. Auslösevorrichtung nach einem der vorstehenden Ansprüche, **dadurch gekennzeichnet, dass** seitlich in der Ausfahreinrichtung (4) in Richtung Ausgefahren-Stellung vor der Auslösekurve (26) eine weitere Auslösekurve (27) feststehend angeordnet ist, die zwischen der Test-Stellung und der Ausgefahren-Stellung mit dem Koppelschieber (38) gekoppelt ist.

## Claims

1. Trigger device for a circuit breaker in conjunction with an extension means (4), in which the circuit breaker (2), which is fixed on a carriage (6), can be displaced on rails (10) arranged in the side walls (8; 9) of the extension means (4) from a retracted position into a test position and from there into an extended position and vice versa, rear rod contacts of the circuit breaker (2) being connected to stationary counter contacts for the main current in the retracted position and by contrast being separated therefrom in the test position and the retracted position, for which purpose a drive, in particular a spindle drive (12), is in an operative connection with the carriage (6) on the one hand so as to be drivable by a drive tool (14) which is to be applied and on the other hand via lateral drive means, comprising
- first trigger means (20, 42) connected to the circuit breaker (2) and having an unlatching action on the actuation mechanism thereof, and
- second trigger means (26, 28) connected to the extension means (4), **characterised in that**
- the first trigger means (20, 42) extend out of the ends of the circuit breaker (2),
- the second trigger means (26, 28) consist of
- a trigger cam (26) arranged in the extension means (4), and
- a trigger slider (28) mounted in the extension means (4), which is arranged directly after the trigger cam (26) in the direction of the retracted position and can be loaded by the drive tool (14),
- a coupling slider (38) mounted in the carriage (6), which is arranged between the first trigger means (20, 42) and the second trigger means (26, 28),
- at least one of the first trigger means (20, 42) and the coupling slider (38) comprises spring means (40 or 42) which load the coupling slider (38) towards the second trigger means (26, 28), and
- the coupling slider (38) is coupled to the trigger slider (28) when in the retracted position and to the trigger cam (26) when between the retracted position and the test position.

2. Trigger device according to the preceding claim, **characterised in that** the drive tool (14) is a cranked rod and the trigger slider (28) is mounted in one of the side walls (8) of the extension means (4) so as to be pivotal about an axis parallel to the introduction direction of the cranked rod (14).

3. Trigger device according to the preceding claim, **characterised in that** the trigger slider (28) is bevelled on the side facing the cranked rod (14).

4. Trigger device according to any one of the preceding claims, **characterised in that** the coupling slider (38) is movable perpendicular to the adjacent side wall (8) of the extension means (4) and perpendicular to the displacement direction (21) and the trigger cam (26) faces towards the coupling slider (38).

5. Trigger device according to any one of the preceding claims, **characterised in that** the first trigger means (20, 42) are formed from a trigger plunger (20), which is longitudinally movable in the displacement direction (21) of the carriage (6) between the coupling slider (38) and a latching member (19) of the actuation mechanism of the circuit breaker (2), and a further spring means (42), which loads the trigger plunger (20) towards the coupling slider (38).

6. Trigger device according to the preceding claim, **characterised in that** one end of the trigger plunger (20) extends out of the rear of the circuit breaker (2).

7. Trigger device according to either claim 5 or claim 6, **characterised in that** the coupling slider (38) is bevelled on the side facing the trigger plunger (20).

8. Trigger device according to the preceding claim, **characterised in that** an intermediate member (50), the surface of which is rounded at least in some regions, is mounted in the carriage (6) between the trigger plunger (20) and the coupling slider (38).

9. Trigger device according to claim 8, **characterised in that** the intermediate member (50) is provided with a spherical surface.

10. Trigger device according to claim 8, **characterised in that** the intermediate member (50) is provided with a cylindrical generated surface.

11. Trigger device according to any one of claims 1 to 4, **characterised in that** the first trigger means comprise a trigger lever, which is arranged pivotally between the coupling slider (38) and a latching member (19) of the actuation mechanism of the circuit breaker (2) and resiliently loaded towards the coupling slider (38).

12. Trigger device according to any one of the preceding claims, **characterised in that** the trigger cam (26) is arranged in a stationary manner.

13. Trigger device according to any one of claims 1 to 11, **characterised in that** the trigger cam is integrally connected to the trigger slider.

14. Trigger device according to any one of the preceding claims, **characterised in that** a further trigger cam (27) is arranged in a stationary manner, laterally before the trigger cam (26) in the extension direction (4) towards the extended position, and is coupled to the coupling slider (38) between the test position and the extended position.

## Revendications

1. Dispositif de déclenchement d'un disjoncteur combiné à un dispositif d'extraction (4), dans lequel le disjoncteur (2) fixé sur un traîneau (6) peut être déplacé, sur des rails (10) situés dans les parois latérales (8; 9) du dispositif d'extraction (4), d'une position rentrée dans une position d'essai, de celle-ci dans une position sortie, et inversement, des contacts à fiches sur le côté arrière du disjoncteur (2), pour le courant principal, étant reliés à des contacts antagonistes fixes dans la position rentrée, mais étant séparés de ceux-ci dans la position d'essai et dans la position sortie, ce pourquoi une commande, notamment un mécanisme à broche (12), en liaison active avec le traîneau (6) d'une part de façon à povoir être actionnée par un outil d'entraînement (14) à appliquer et d'autre part par le biais de moyens d'entraînement latéraux, comprenant
- des premiers moyens de déclenchement (20, 42) reliés au disjoncteur (2) et agissant sur son mécanisme d'actionnement en le décliquetant et
- des seconds moyens de déclenchement (26, 28) reliés au dispositif d'extraction (4),
**caractérisé par le fait**
- **que** les premiers moyens de déclenchement (20, 42) sortent du disjoncteur (2) sur le côté d'extrémité,
- **que** les seconds moyens de déclenchement (26, 28) sont formés
- d'une came de déclenchement (26) située dans le dispositif d'extraction (4) et
- d'un coulisseau de déclenchement (28) logé dans le dispositif d'extraction (4), qui est placé directement derrière la came de déclenchement (26), dans la direction de la position rentrée, et peut être actionné par l'outil d'entraînement (14),
- **qu'**un coulisseau de couplage (38) logé dans le traîneau (6) est situé entre les premiers moyens de déclenchement (20, 42) et les seconds moyens de déclenchement (26, 28),
- **qu'**au moins un des premiers moyens de déclenchement (20, 42) et du coulisseau de couplage (38) comporte des moyens de ressort (40 resp. 42) qui agissent sur le coulisseau de couplage (38) en direction des seconds moyens de déclenchement (26, 28) et
- **que** le coulisseau de couplage (38) est couplé au coulisseau de déclenchement (28) dans la position rentrée et à la came de déclenchement (26) entre la position rentrée et la position d'essai.

2. Dispositif de déclenchement selon la revendication précédente, **caractérisé par le fait que** l'outil d'entraînement (14) est une manivelle amovible et le coulisseau de déclenchement (28) est monté de manière à pouvoir pivoter autour d'un axe parallèle à la direction d'introduction de la manivelle amovible (14) dans une des parois latérales (8) du dispositif d'extraction (4).

3. Dispositif de déclenchement selon la revendication précédente, **caractérisé par le fait que** le coulisseau de déclenchement (28) est biseauté du côté de la manivelle amovible (14).

4. Dispositif de déclenchement selon l'une quelconque des revendications précédentes, **caractérisé par le fait que** le coulisseau de couplage (38) est mobile perpendiculairement à la paroi latérale (8) contiguë du dispositif d'extraction (4) et perpendiculairement à la direction de déplacement (21) et la came de déclenchement (26) est tournée vers le coulisseau de couplage (38).

5. Dispositif de déclenchement selon l'une quelconque des revendications précédentes, **caractérisé par le fait que** les premiers moyens de déclenchement (20, 42) sont formés d'un poussoir de déclenchement (20) qui est disposé d'une manière permettant un déplacement longitudinal dans la direction de déplacement (21) du traîneau (6) entre le coulisseau de couplage (38) et un élément d'encliquetage (19) du mécanisme d'actionnement du disjoncteur (2) et d'un autre moyen de ressort (42) qui a une action sur le poussoir de déclenchement (20) en direction du coulisseau de couplage (38).

6. Dispositif de déclenchement selon la revendication précédente, **caractérisé par le fait que** le poussoir de déclenchement (20) sort, par une extrémité, du côté arrière du disjoncteur (2).

7. Dispositif de déclenchement selon la revendication 5 ou 6, **caractérisé par le fait que** le coulisseau de couplage (38) est biseauté du côté du poussoir de déclenchement (20).

8. Dispositif de déclenchement selon la revendication précédente, **caractérisé par le fait qu'**un élément intermédiaire (50) ayant une surface arrondie au moins par endroits est monté dans le traîneau (6) entre le poussoir de déclenchement (20) et le coulisseau de couplage (38).

9. Dispositif de déclenchement selon la revendication 8, **caractérisé par le fait que** l'élément intermédiaire (50) est pourvu d'une surface sphérique.

10. Dispositif de déclenchement selon la revendication 8, **caractérisé par le fait que** l'élément intermédiaire (50) est pourvu d'une surface périphérique cylindrique.

11. Dispositif de déclenchement selon l'une quelconque des revendications 1 à 4, **caractérisé par le fait que** les premiers moyens de déclenchement comportent un levier de déclenchement, disposé de manière pivotante entre le coulisseau de couplage (38) et un élément d'encliquetage (19) du mécanisme d'actionnement du disjoncteur (2) et sont sollicités par ressort en direction du coulisseau de couplage (38).

12. Dispositif de déclenchement selon l'une quelconque des revendications précédentes, **caractérisé par le fait que** la came de déclenchement (26) est fixe.

13. Dispositif de déclenchement selon l'une quelconque des revendications 1 à 11, **caractérisé par le fait que** la came de déclenchement est reliée d'un seul tenant au coulisseau de déclenchement.

14. Dispositif de déclenchement selon l'une quelconque des revendications précédentes, **caractérisé par le fait qu'**une autre came de déclenchement (27) qui, entre la position d'essai et la position sortie, est couplée au coulisseau de couplage (38), est disposée de manière fixe avant la came de déclenchement (26), dans la direction de la position sortie, latéralement dans le dispositif d'extraction (4).
